Europäisches Patentamt

European Patent Office

Office européen des brevets

(11) Veröffentlichungsnummer: **0 183 899**

**A1**

(12) # EUROPÄISCHE PATENTANMELDUNG

(21) Anmeldenummer: **85104732.4**

(22) Anmeldetag: **18.04.85**

(51) Int. Cl.⁴: **E 21 B 10/08**
**E 21 B 10/10, E 21 B 10/12**

(30) Priorität: **19.04.84 CH 1998/84**

(43) Veröffentlichungstag der Anmeldung:
**11.06.86 Patentblatt 86/24**

(84) Benannte Vertragsstaaten:
**AT DE FR GB SE**

(71) Anmelder: **Bechem, Hannelore**
**Tiefendorfer Strasse 87**
**D-5800 Hagen 1-Berchum(DE)**

(72) Erfinder: **Lenzen, Dieter**
**Am Lührenbach 8**
**D-5860 Letmathe(DE)**

(72) Erfinder: **Bechem, Philip**
**Tiefendorfer Strasse 87**
**D-5800 Hagen 1(DE)**

(54) **Radial schwingendes/schlagendes und angetriebenes/rotierendes Abtrag-, Schlitz-, Bohr-Mehrrollenwerkzeug.**

(57) Bei einer Rolle (1) für ein Rollenbohrwerkzeug wird eine Vibrations- oder Schlagbewegung durch eine Unwucht mit Bezug auf die Rollenachse erzielt. Die Grösse der Unwucht und damit die Amplitude der Schlagbewegung ist regelbar durch Einfüllen einer Flüssigkeit von hoher Dichte in einen exzentrisch zur Rollenachse angebrachten Hohlraum (3).

Croydon Printing Company Ltd

0183899

System- und Zeichnungsbeschreibung

Radial schwingendes/schlagendes angetriebenes/rotierendes
Bohrrollenwerkzeug gekennzeichnet durch die Kombination einer
Unwucht an/auf/in einer Welle – und der Ausbildung dieser
Welle als Exzenterwelle mit min. 2 gegeneinander versetzten
und gegeneinander ausgewuchteten Exzenterzapfen mit darauf
drehend gelagerten Bohrrollen.

Um den Andruck wesentlich reduzieren zu können und den Vortrieb beim Bohren härterer Materialien – vorzugsweise Hartgestein – wesentlich erhöhen zu können ist es bekannt, Rollen-
oder Fräsbohrwerkzeuge zu aktivieren, d.h. mit Schlaggeräten
zu versehen. U.a. gibt es solche mit Linear- und andere mit
Radialschlagaggregaten.

Erfindungsgemäß wird ein Unwucht-, Radial- bzw. Kreiserreger
eines Rollenbohrwerkzeuges so modifiziert/kombiniert, daß er
dadurch erheblich effizienter und universeller einsetzbar
wird und zwar im wesentlichen durch die Kombination mit einer
Exzenteraktivierung – vorzugsweise in Kombination mit Bohrrollen, die an ihrem äußeren Umfang mit Verzahnungen, Picken,
Stiften oder dgl. versehen sind. Durch diese Kombinationen
werden die Schlagzahlen in Abhängigkeit der Anzahl der Exzenterzapfen mit Bohrrollen im minimum verdoppelt und auch der
spezifische Andruck pro Bohrwerkzeug entsprechend vermehrfacht, d.h. die Vortriebsleistung erhöht und der erforderliche
Andruck reduziert.

Mit –1– ist eine bombierte Ausbildungsform einer der Bohrrollen
dargestellt, im speziellen mit eingesetzten Hartmetallstiften
verschiedener Konturen; –2– ist die unwuchtige bis ausgewuchtete Exzenterwelle in einer speziellen Ausführungsform mit einem Hohrraum –3–, der durch ein durch die Bohrung –4– rein-
oder rausgepreßtes flüssiges Medium die Bohrrollen und Exzenterwelle von ausgewuchtet bis max-unwuchtig arbeiten läßt,
–5– ist die Medienaustrittsbohrung zu –3– und –4–, und –6–
eine der Bohrungen, die durch Flüssigkeits- oder Luftüberdruck
die Lagerspalten von Staub etc. freihalten. Mit –7– ist eines
der zwei Lager als Gleitlager dargestellt, –8– ist eine Ratsche oder Freilauf, die nur das Drehen der Bohrrollen in Drehrichtung der Exzenterwelle verhindert – in einer besonderen
Ausführungsform mit einem kleineren Zahnkranz an der Bohrrolle

C183899

und dem größeren Zahnkranz im Lagerblock -16- versehen, um ein Abwälzen des kleineren in dem größeren Zahnkranz zu gewährleisten und bei gesperrter Ratsche bzw. Freilauf ein Zwangsdrehen der Bohrrollen zu bewirken - umgekehrt zur Drehrichtung der Exzenterwelle und extrem versetzt, z.B. von 6.000 U/min der Exzenterwelle auf 200 U/min der Bohrrollen, mit einem Durchmesser von z.B. 200 mm und einer Amplitude von 3 mm; -9- bewirkt das gleiche in einer anderen von mehreren Ausführungsmöglichkeiten z.B. über eine Blattfeder, die entweder das Drehen in einer bestimmten Richtung verhindert - s.o. - oder unnachgiebig in eine entsprechende Verzahnung eingreift, sodaß ein Zwangsdrehen der Bohrrollen - s.o. - bewirkt wird. Mit -10- ist ein mit einem spezifisch hochgewichtigen Material ausgefüllter Hohlraum gezeigt, das bei nicht gefülltem Hohlraum -3- die Exzenterwelle trotzdem ausgewuchtet laufen läßt, d.h. eine Unwuchtung wird in diesem Fall über den Zulauf einer Flüssigkeit in -3- erreicht und über Pressluft wieder bis zur völligen Auswuchtung geregelt; -11- ist der spezifische Massenausgleich vorzugsweise Blei oder dgl., um bei z.B. wassergefülltem Hohlraum -3- das Aggregat ausgewuchtet und damit schwingungsfrei arbeiten su lassen zu können, ohne flüssiges Medium ist es in diesem Fall unwuchtig; -12- ist eine weitere Ausbildungsform der Bohrrollen -1- und zwar dachförmig/geradlinig gestuft mehrschichtig abtragend, mit durchgehenden oder unterbrochen Disken, mit radial angeordneten Hartmetallstiften oder dgl. Bei -13- sind an der Bohrrolle radial angeordnete auswechselbare Rollenbohrwerkzeuge verschiedener Ausbildungsformen dargestellt - mehrschichtig/ gestuft abtragend; -14- ist einerseits als Einzeldiskenrollenbohr-/Abtragwerkzeug dargestellt, aber auch mit auswechselbaren Picken/Zähnen, Hartmetallstiften oder dgl. zu versehen, u.a. um Schlitze geringerer Tiefe herzustellen; in einer Kontur ist -14- aber auch als Walze dargestellt z.B. zum Bodenverdichten - wofür gesonderter Schutz beantragt wird. Mit -15- ist eine bevorzugte Dichtung zwischen einzelnen Bohrrollen dargestellt - und zwar die Verwendung einer ein- oder zweiteiligen Stahlgleitringdichtung z.B. Caterpillar - wofür gesonderter Schutz beantragt wird - ebenfalls für die Verwendung dieser Dichtung zwischen Bohrrollen und Lagerblöcken.

0183899

Mit x,y und z sind einige der Anwendungs- Arbeitsmöglichkeiten dargestellt, mit x wird gezeigt, daß das dargestellte Aggregat nicht nur Schlitze in der Höhe/Größe der Bohrrollen erstellen kann, wobei es auch in Richtung der Achse der Exzenterwelle abtragend verschoben werden kann, sondern auch durch Drehen um die Mittelachse y - zum Pilot - oder Vollochbohrer wird - wobei für diese Anwendung ein gesonderter Schutz für die Verwendung der bombierten Form - nach 1 - beantragt wird; z zeigt gerade und radiale Bewegungen, d.h. das Aggregat kann in allen nur möglichen Richtungen abtragen - wobei für die Kombination des radialen, linearen oder sonstigen Abtragens mit kontinuierlichem Rotieren (wie beim Pilotbohren) ebenfalls gesonderter Schutz beantragt wird.

Für alle beschriebenen und/oder gezeichneten Systeme, Anordnungen, Verwendungen und/oder Verfahren und deren Kombinationen wird gesonderter Schutz beantragt.

Anspruch 1

Radial schwingendes/schlagendes angetriebenes/rotierendes Bohrrollenwerkzeug gekennzeichnet durch die Kombination einer Unwucht an/auf/in einer Welle - und der Ausbildung dieser Welle als Exzenterwelle mit min. 2 gegeneinander versetzten und gegeneinander ausgewuchteten Exzenterzapfen mit darauf drehend gelagerten Bohrrollen.

A 2 nach 1 dadurch gekennzeichnet, das Aggregat in einer zuvor festgelegten Un- oder Auswuchtung arbeiten zu lassen.

A 3 nach 1 und/oder 2 gekennzeichnet durch Regelbarkeit von Unwucht 0 bis Unwucht max - u.a. um kritische Drehzahlbereiche ausgewuchtet durchfahren zu können - als Verfahrensanspruch.

A 4 nach 1 und/oder 2-3 dadurch gekennzeichnet, daß die Bohrrollen an ihrem äußeren Umfang mit Verzahnungen, Picken, Stiften oder dgl. versehen sind.

A 5 nach 1 und/oder 2-4 dadurch gekennzeichnet, sich durch die Wahl der Exzenteramplitude, der Frequenz und Unwuchtigkeit auf das abzutragende Material optimal einzustellen.

A 6 nach 1 und/oder 2-5 dadurch gekennzeichnet, daß das Aggregat nachgiebig gelagert/aufgehängt ist.

A 7 nach 1 und/oder 2-6 dadurch gekennzeichnet, daß der Vorschub in Abhängigkeit des Rück- bzw. Andruckes und/oder der Belastung des Antriebes/Motors gesteuert wird.

A 8 nach 1 und/oder 2-7 durch den Verfahrensanspruch gekennzeichnet, daß Fräs- oder Bohrrollen an einem Ausleger - radial an einer Scheibe - oder Rollenbohrwerkzeuge an einem rotierenden Rad oder dgl. angeordnet sind - und zum Abtragen/Vortreiben in allen Richtungen schwenk- und/oder drehbar sind.

A 9 nach 1 und/oder 2-8 Verfahrensanspruch dadurch gekennzeichnet, daß bei Verwendung von 2 180° gegeneinander versetzten Exzentern und 2 Bohrrollen der Unwuchtschlag im 3-Takt pro Umdrehung d.h. im wesentlichen mittig zwischen den beiden Kurbelwellenschlägen erfolgt.

A 10 nach 1 und/oder 2-9 dadurch gekennzeichnet, daß der Antrieb von außen auf die Welle erfolgt.

A 11 nach 1 und/oder 2-10 dadurch gekennzeichnet, daß der Antriebsmotor im Inneren der Bohrrollen installiert ist.

A 12 nach 1 und/oder 2-11 dadurch gekennzeichnet, daß an den Bohrrollen Zahnkränze oder dgl. oder sonstige Mitnehmerelemente angeordnet sind, die in entsprechen Zahnkränzen oder dgl. am/im nicht drehenden, stehenden Grundkörper kraftschlüssig ablaufen und in Abhängigkeit des gewählten Zahnkranzdurchmessers, - der Kurbelzapfenamplitude und der Drehzahl der Welle - die Bohrrollen entgegengesetzt zur Drehrichtung der Welle zwangsweise mit extrem reduzierten Drehzahlen antreiben.

A 13 nach 1 und/oder 2-12 dadurch gekennzeichnet, daß der Zahnkranz, eine Feder oder dgl. an der Bohrrolle und/oder am Grundkörper als Freilauf, Ratsche oder dgl. ausgebildet ist, um alternativ nur das Drehen der Bohrrollen in Drehrichtung der Welle zu verhindern.

A 14 nach 1 und/oder 2-13 dadurch gekennzeichnet, daß der Außendurchmesser der Bohrrollen zum rotierenden Pilot-/Volllochbohren größer ist, als der des Aggregates/Antriebes selbst.

A 15 nach 1 und/oder 2-14 dadurch gekennzeichnet, daß die an den Bohrrollen radial angeordneten Fräs- und/oder Bohrwerkzeuge auswechselbar sind.

A 16 nach 1 und/oder 2-15 dadurch gekennzeichnet, daß die eigentlichen Bohrwerkzeuge aus Hartmetall oder sonstigem extrem verschleißfestem Material bestehen.

- 3 -

0183899

A. 17 nach 1 und/oder 2-16 dadurch gekennzeichnet, daß die Bohrrollen mit radial angeordneten auswechselbaren Rollenbohrwerkzeugen versehen sind.

A 18 nach 1 und/oder 2-17 dadurch gekennzeichnet, daß jede Fräs-/Bohrrolle an ihrem äußersten Umfang nur eine Reihe Werkzeuge hat.

A 19 nach 1 und/oder 2-18 dadurch gekennzeichnet, daß die Bohrrollen in ihrem äußeren Arbeitsbereich bombiert ausgebildet sind, mit mehreren Reihen von Werkzeugen versehen sind und mehrschichtig abtragen.

A 20 nach 1 und/oder 2-19 dadurch gekennzeichnet, daß die Bohrrollen in ihrem äußeren Arbeitsbereich geradlinig ausgebildet - mit mehreren Reihen von Werkzeugen versehen sind und mehrschichtig abtragen.

A 21 nach 1 und/oder 2-20 dadurch gekennzeichnet, daß der Freilauf, die Ratsche oder dgl. zum drehend schlagenden Abtragen aktiviert und wahlweise zum drehend fräsenden Abtragen der Bohrrollen abgeschaltet d.h. blockiert werden kann.

A 22 nach 1 und/oder 2-21 dadurch gekennzeichnet, daß zur Unwuchtung oder Auswuchtung der rotierenden Welle eine Flüssigkeit in einen außenmittig angeordneten Hohlraum gedrückt und dieser Hohlraum vorzugsweise über Pressluft wieder entleert wird.

A 23 nach 1 und/oder 2-22 Verfahrensanspruch dadurch gekennzeichnet, daß der für das Umpumper der Unwucht erforderliche Luft, oder Flüssigkeit erforderliche Druck genutzt wird, um die Lager, die Luftspalten unter Überdruck zu halten d.h., damit weitgehend das Eindringen von Schmutz etc. zu verhindern.

In nur einer zusammengefaßten Zeichnung sind Werkzeuge, Anordnungen etc. nur beispielhaft und zum Teil nicht maßstabsgerecht dargestellt.

**Europäisches Patentamt**

**EUROPÄISCHER RECHERCHENBERICHT**

**0183899**
Nummer der Anmeldung

EP 85 10 4732

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-3 131 201 (PREUSSAG)<br>* Seite 18, Zeile 15 - Seite 20, Zeile 17; Figuren 1,4,5 * | 1,2,5 | E 21 B 10/08<br>E 21 B 10/10<br>E 21 B 10/12 |
| Y | | 3,4,6,<br>8,10-<br>12,14-<br>20,22 | |
| Y | DE-A-2 945 228 (SALZGITTER)<br>* Seite 5, Zeile 10 - Seite 6, Zeile 31; Figuren * | 3,22 | |
| Y | FR-A-2 126 262 (SÖDING & HALBACH)<br>* Figuren 3,6,9 * | 4,8 | |
| Y | DE-A-2 500 961 (DEMAG)<br>* Figure 1 * | 6 | **RECHERCHIERTE SACHGEBIETE (Int. Cl.4)** |
| Y | US-A-3 695 370 (JONES)<br><br>* Spalte 2, Zeile 4 - Spalte 3, Zeile 2; Figuren * | 10,12,<br>14 | E 21 B<br>E 21 D |
| Y | US-A-4 256 191 (JONES)<br>* Spalte 7, Zeile 30 - Spalte 8, Zeile 22; Figuren 7,8 * | 11,19 | |

--- -/-

Der vorliegende Recherchenbericht wurde für alle Patentansprüche erstellt.

| Recherchenort<br>DEN HAAG | Abschlußdatum der Recherche<br>21-08-1985 | Prüfer<br>RAMPELMANN J. |
|---|---|---|

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | US-A-3 593 812 (PETERSON)<br><br>* Figur 1 * | 15,16, 20 | |
| Y | DE-A-2 723 675 (SALZGITTER)<br>* Ansprüche; Figuren * | 17 | |
| Y | US-A-4 040 493 (SAXMAN)<br>* Figur 1 * | 18 | |
| A | DE-B-1 953 550 (KRUPP) | | |
| A | GLÜCKAUF, Band 118, Nr. 9, Mai 1982, Seiten 441-444, Bochum, DE; L. BAUMANN: "Neue Verfahren des maschinellen Streckenvortriebs" | | |
| A | US-A-3 250 337 (DEMO) | | |
| A | US-A-2 033 638 (KOPPL) | | |
| A | US-A-3 982 594 (BERTHIAUME) | | |

RECHERCHIERTE SACHGEBIETE (Int. Cl.4)

Der vorliegende Recherchenbericht wurde für alle Patentansprüche erstellt.

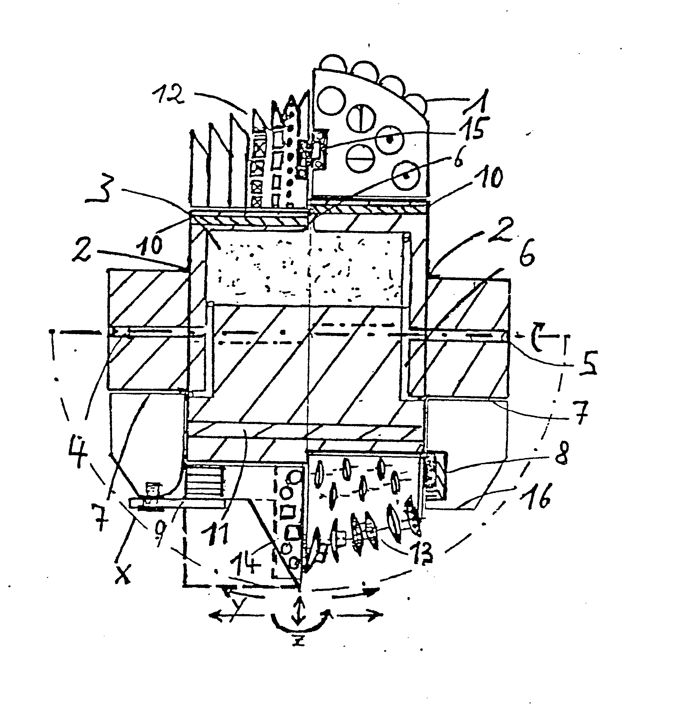

| Recherchenort<br>DEN HAAG | Abschlußdatum der Recherche<br>21-08-1985 | Prüfer<br>RAMPELMANN J. |
|---|---|---|